# FASCICULE DE BREVET EUROPEEN

(11) **EP 4 090 872 B1**
(45) Date de publication et mention de la délivrance du brevet: **09.10.2024**
(21) Numéro de dépôt: 21700759.0
(22) Date de dépôt: 15.01.2021
(51) Int. Cl.: F16L 37/088, F16L 37/091

(54) **DISPOSITIF DE RACCORDEMENT A TEMOIN DE CONNEXION**
ANSCHLUSSVORRICHTUNG MIT ANSCHLUSSINDIKATOR
CONNECTING DEVICE WITH CONNECTION INDICATOR

(30) Priorité: 16.01.2020 FR 2000410
(43) Date de publication de la demande: 23.11.2022
(73) Titulaire: Parker Hannifin EMEA S.à.r.l., 1163 Etoy (CH)
(72) Inventeur: GUILLARD, Philippe, 35760 SAINT-GREGOIRE (FR); VALLET, Jean-François, 35150 JANZE (FR); LE QUERE, Philippe, 35830 BETTON (FR)
(74) Mandataire: Cabinet Boettcher
(86) Numéro de dépôt international: PCT/EP2021/050870
(87) Numéro de publication internationale: WO 2021/144459

(56) Documents cités:
- WO-A1-2018/224588
- JP-A- 2001 221 386
- JP-A- 2001 349 488
- JP-A- 2011 033 056
- JP-A- H0 735 281

## Description

### ARRIERE PLAN DE L'INVENTION

La présente invention concerne le domaine des circuits de transport de fluide, notamment dans les véhicules automobiles tels que les camions, comme par exemple les circuits hydrauliques de freinage.

Il est connu de raccorder un tube à un autre élément (autre tube, distributeur, actionneur, vanne...) d'un circuit de transport de fluide sous pression au moyen d'un dispositif de raccordement comprenant un corps délimitant un canal ayant un premier tronçon agencé pour recevoir une portion d'extrémité du tube et un deuxième tronçon relié audit autre élément. De manière classique, le premier tronçon est pourvu intérieurement de moyens pour assujettir de manière étanche la portion d'extrémité de tube dans le canal. Ces moyens comprennent généralement un élément d'accrochage tel qu'une pince, un jonc fendu ou une rondelle intérieurement dentée, et un élément d'étanchéité tel qu'un joint annulaire destiné à être comprimé entre une surface extérieure du tube et une surface intérieure du canal.

Une fuite du dispositif de raccordement entraine irrémédiablement une diminution de la pression du fluide circulant dans le circuit, ce qui peut s'avérer dangereux et entraîner de graves dommages, notamment dans un circuit d'un système de freinage de véhicule où la diminution de pression risque de rendre inopérant ledit système de freinage.

Il apparaît que la présence d'une fuite dans les circuits de transport de fluide est souvent due à un mauvais assemblage du tube avec le dispositif de raccordement. Il est en effet courant que le tube ne soit pas suffisamment emmanché dans le corps du dispositif de raccordement pour être engagé dans l'élément d'étanchéité. Un mauvais emmanchement arrive généralement parce qu'il n'est pas facile de distinguer, lors de l'emmanchement, l'insertion du tube dans l'élément d'accrochage, l'insertion du tube dans l'élément d'étanchéité, et enfin l'arrivée du tube en butée à supposer qu'il y en ait une. Ceci est d'autant plus difficile qu'il existe de nombreux types de raccords qui mettent en jeu des efforts différents et procurent à l'opérateur des sensations différentes.

Il est donc avantageux d'avoir un témoin de fin de connexion du tube afin d'être sûr que le tube est suffisamment emmanché dans le raccord pour garantir l'étanchéité du dispositif de raccordement.

Une solution consiste à réaliser sur la surface extérieure du tube une marque qui est masquée par le corps du raccord lorsque le tube est suffisamment emmanché dans le raccord. Cette solution suppose donc que l'opérateur pense à réaliser ladite marque sur le tube sans quoi il pensera que le tube est correctement connecté alors même qu'il n'est pas suffisamment enfoncé dans le corps du dispositif pour coopérer avec les moyens de retenue.

Le document JP 2001 349488 A divulgue un dispositif de raccordement d'un tronçon d'extrémité de tube avec un témoin radialement mobile.

### OBJET DE L'INVENTION

L'invention a donc pour but de proposer un dispositif de raccordement permettant d'obvier au moins en partie aux problèmes précités.

### RESUME DE L'INVENTION

A cet effet, on prévoit, selon l'invention un dispositif de raccordement d'un tronçon d'extrémité de tube selon la revendication 1.

Ainsi, tout en assurant une étanchéité sur l'extérieur du tube, l'invention permet de signaler à l'opérateur que la connexion est effective et qu'il peut cesser son effort d'insertion du tube dans le corps du dispositif.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
- la figure 1a est une vue en coupe longitudinale d'un dispositif de raccordement selon un premier mode de réalisation, qui n'est pas compris par les revendications, en attente d'un tube ;
- la figure 1b est une vue en coupe longitudinale du dispositif de raccordement selon le premier mode de réalisation, en début de connexion d'un tube ;
- la figure 1c est une vue en coupe longitudinale du dispositif de raccordement selon le premier mode de réalisation, après une première course d'enfoncement du tube ;
- la figure 1d est une vue en coupe longitudinale du dispositif de raccordement selon le premier mode de réalisation, après une deuxième course d'enfoncement du tube ;
- la figure 1e est une vue en coupe longitudinale du dispositif de raccordement selon le premier mode de réalisation, à la fin de la connexion du tube ;
- la figure 1f est une vue en coupe longitudinale du dispositif de raccordement selon le premier mode de réalisation, après mise sous pression du circuit ;
- la figure 2a est une vue partielle d'un dispositif de raccordement selon un deuxième mode de réalisation, qui est compris par les revendications, en attente d'un tube, représenté en coupe longitudinale selon un premier plan de coupe ;
- la figure 2b est une vue partielle du dispositif de raccordement selon le deuxième mode de réalisation, en attente d'un tube, représenté en coupe longitudinale selon un deuxième plan de coupe perpendiculaire au premier plan de coupe ;
- la figure 3a est une vue partielle du dispositif de raccordement selon le deuxième mode de réalisation, en fin de connexion du tube, représenté en coupe longitudinale selon un premier plan de coupe ;
- la figure 3b est une vue partielle du dispositif de raccordement selon le deuxième mode de réalisation, en fin de connexion du tube, représenté en coupe longitudinale selon un deuxième plan de coupe perpendiculaire au premier plan de coupe ;
- la figure 4a est une vue partielle du dispositif de raccordement selon le deuxième mode de réalisation, après mise sous pression du circuit, représenté en coupe longitudinale selon un premier plan de coupe ;
- la figure 4b est une vue partielle du dispositif de raccordement selon le deuxième mode de réalisation, après mise sous pression du circuit, représenté en coupe longitudinale selon un deuxième plan de coupe perpendiculaire au premier plan de coupe ;
- la figure 5a est une vue partielle d'un dispositif de raccordement selon un troisième mode de réalisation, qui est compris par les revendications, en attente d'un tube, représenté en perspective ;
- la figure 5b est une vue partielle du dispositif de raccordement selon le troisième mode de réalisation, en attente d'un tube, représenté de face ;
- la figure 5c est une vue partielle du dispositif de raccordement selon le troisième mode de réalisation, en attente d'un tube, représenté de côté ;
- la figure 6a est une vue partielle du dispositif de raccordement selon le troisième mode de réalisation, après connexion d'un tube, représenté en perspective ;
- la figure 6b est une vue partielle du dispositif de raccordement selon le troisième mode de réalisation, après connexion d'un tube, représenté de face ;
- la figure 6c est une vue partielle du dispositif, de raccordement selon le troisième mode de réalisation, après connexion d'un tube, représenté de côté ;
- la figure 7a est une vue de détail du dispositif de raccordement selon le troisième mode de réalisation, en attente d'un tube, représenté en coupe longitudinale selon un premier plan de coupe ;
- la figure 7b est une vue de détail du dispositif de raccordement selon le troisième mode de réalisation, en attente d'un tube, représenté en coupe longitudinale selon un deuxième plan de coupe perpendiculaire au premier plan de coupe ;
- la figure 8a est une vue de détail du dispositif de raccordement selon le troisième mode de réalisation, en fin de connexion du tube, représenté en coupe longitudinale selon un premier plan de coupe ;
- la figure 8b est une vue de détail du dispositif de raccordement selon le troisième mode de réalisation, en fin de connexion du tube, représenté en coupe longitudinale selon un deuxième plan de coupe perpendiculaire au premier plan de coupe ;
- la figure 9a est une vue partielle du dispositif de raccordement selon le troisième mode de réalisation, en attente d'un tube, représenté en coupe longitudinale selon un premier plan de coupe ;
- la figure 9b est une vue partielle du dispositif de raccordement selon le troisième mode de réalisation, en attente d'un tube, représenté en coupe longitudinale selon un deuxième plan de coupe perpendiculaire au premier plan de coupe ;
- la figure 10a est une vue partielle du dispositif, de raccordement selon le troisième mode de réalisation, en début de connexion d'un tube, représenté en coupe longitudinale selon un premier plan de coupe ;
- la figure 10b est une vue partielle du dispositif de raccordement selon le troisième mode de réalisation, en début de connexion d'un tube, représenté en coupe longitudinale selon un deuxième plan de coupe perpendiculaire au premier plan de coupe ;
- la figure 11a est une vue partielle du dispositif de raccordement selon le troisième mode de réalisation, en cours de connexion du tube, représenté en coupe longitudinale selon un premier plan de coupe ;
- la figure 11b est une vue partielle du dispositif de raccordement selon le troisième mode de réalisation, en cours de connexion du tube, représenté en coupe longitudinale selon un deuxième plan de coupe perpendiculaire au premier plan de coupe ;
- la figure 12a est une vue partielle du dispositif de raccordement selon le troisième mode de réalisation, en fin de connexion du tube, représenté en coupe longitudinale selon un premier plan de coupe (a) et en coupe longitudinale selon un deuxième plan de coupe perpendiculaire au premier ;
- la figure 12b est une vue partielle du dispositif de raccordement selon le troisième mode de réalisation, en fin de connexion du tube, représenté en coupe longitudinale selon un deuxième plan de coupe perpendiculaire au premier plan de coupe ;
- la figure 13a est une vue partielle du dispositif de raccordement selon le troisième mode de réalisation, après mise sous pression du circuit, représenté en coupe longitudinale selon un premier plan de coupe.
- la figure 13b est une vue partielle du dispositif de raccordement selon le troisième mode de réalisation, après mise sous pression du circuit, représenté en coupe longitudinale selon un deuxième plan de coupe perpendiculaire au premier plan de coupe.

### DESCRIPTION DETAILLEE DE L'INVENTION

L'invention est ici décrite en application au raccordement d'un tube T à un élément émetteur et/ou récepteur de fluide appartenant à un circuit de transport de fluide non visible sur les figures. Ledit élément de circuit peut être un autre tube, un distributeur, une pompe, un réservoir, un actionneur comme un vérin ou un moteur, ou tout autre élément d'un circuit de transport de fluide.

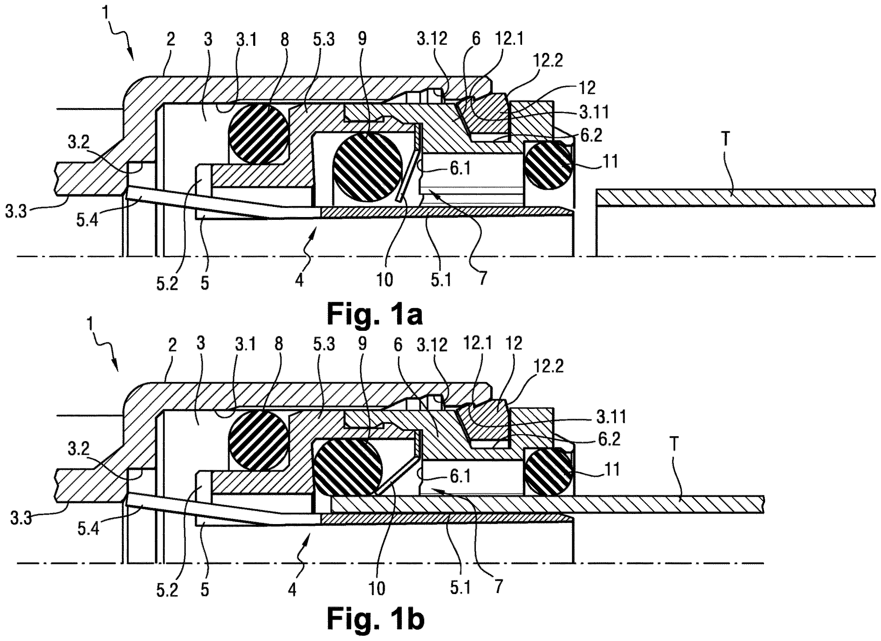

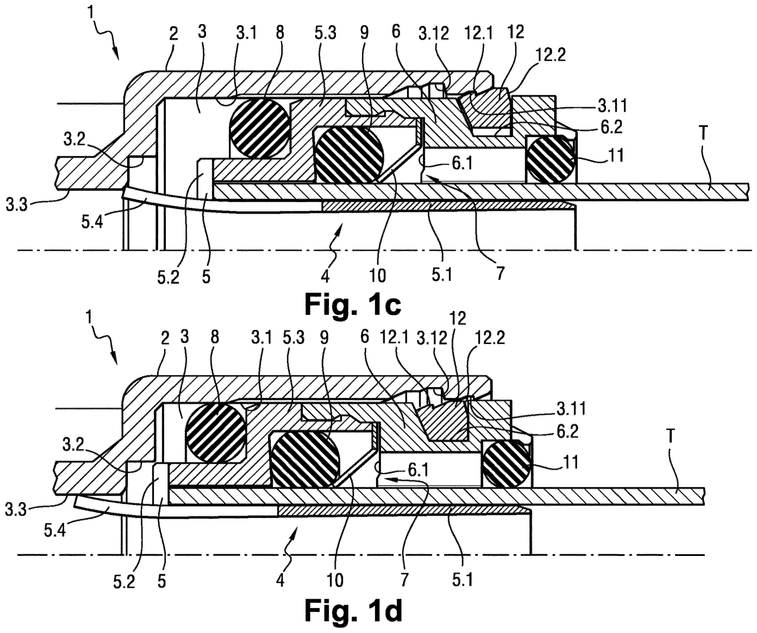

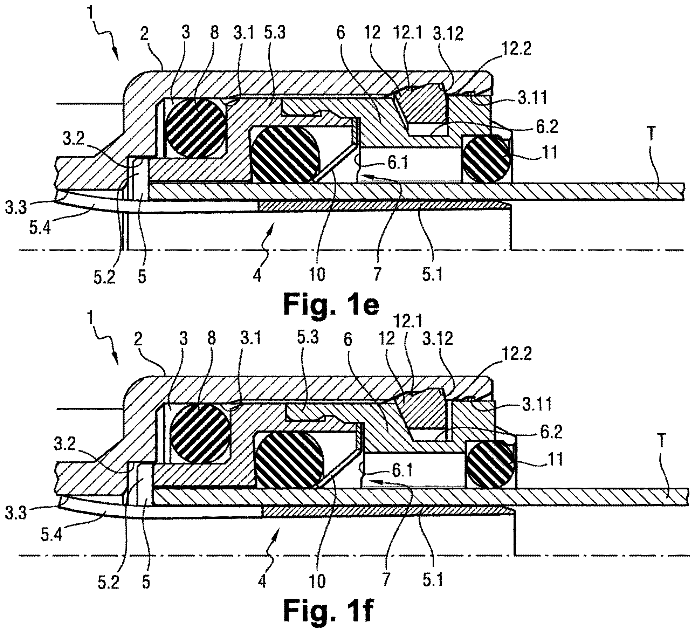

En référence à la figure 1, et selon le premier mode de réalisation, le dispositif de raccordement, généralement désigné en 1, comprend un corps tubulaire 2 axialement divisé en une section de raccordement à un tronçon d'extrémité du tube T et une section de raccordement à l'élément de circuit. Le corps tubulaire 2 délimite un canal 3 comportant successivement un tronçon d'entrée 3.1 relié via un lamage 3.2 à un tronçon principal 3.3 destiné à être en communication avec un canal de l'élément de circuit.

Un ensemble mobile généralement désigné en 4 est monté dans le tronçon d'entrée 3.1. L'ensemble mobile 4 comprend une fourrure 5 et un insert 6 recevant des moyens de retenue 7 pour assujettir de manière étanche le tronçon d'extrémité de tube dans le canal 3.

L'ensemble mobile 4 peut coulisser entre une position d'attente (figure 1 a, b, c) dans laquelle la fourrure 5 est écartée d'un fond du lamage 3.2 formant une butée à son enfoncement dans le canal 3 et une position enfoncée de fonctionnement (figure 1 d, e, f) dans laquelle la fourrure 5 est en appui contre le fond du lamage 3.2.

La fourrure 5 comprend une douille interne 5.1 reliée par une collerette 5.2 à une douille externe 5.3 coaxiale à la douille interne 5.1. La collerette 5.2 s'étend en regard du fond du lamage 3.2.

La douille interne 5.1 a une première extrémité voisine d'une extrémité libre de l'insert 6 et une deuxième extrémité ici raccordée à la collerette 5.2. La deuxième extrémité de la douille interne 5.1 est prolongée au-delà de la collerette 5.2 par deux jambes 5.4 diamétralement opposées prenant appui contre le fond du lamage 3.2 lorsque l'ensemble mobile 4 est en position d'attente pour s'opposer au déplacement de l'ensemble mobile 4 vers la position de fonctionnement. Plus précisément, les jambes 5.4 sont en appui contre un chanfrein ménagé dans le fond du lamage 3.2 autour du débouché du tronçon principale 3.3.

La douille externe 5.3 comprend :
- une partie de plus faible diamètre (légèrement inférieur au diamètre du lamage 3.2) qui est raccordée à la collerette d'extrémité 5.2 et qui porte un joint d'étanchéité annulaire 8, élastiquement compressible radialement, pour assurer l'étanchéité entre la paroi du tronçon d'entrée 3.1 du canal 3 et la surface externe de la partie de plus faible diamètre ;
- une partie de plus fort diamètre (légèrement inférieur au diamètre du tronçon d'entrée 3.1) qui est raccordée à la partie de plus faible diamètre, qui est engagée dans une extrémité de l'insert 6 opposée à son extrémité libre et qui est pourvue intérieurement d'un joint d'étanchéité annulaire 9, élastiquement compressible radialement, pour assurer l'étanchéité entre la surface externe du tube T et la surface interne de la partie de plus fort diamètre.

L'insert 6 est pourvu intérieurement d'un épaulement 6.1 qui emprisonne une rondelle d'accrochage 10, intérieurement dentée, avec l'extrémité libre de la douille externe 5.3 et d'un joint annulaire anti-poussière 11 bloqué dans l'extrémité libre de l'insert 6 en regard de l'extrémité libre de la douille interne 5.1 pour empêcher le passage de poussière entre le tube T et la surface interne de l'insert 6.

L'insert 6 est en outre pourvu extérieurement d'une gorge 6.2 recevant un élément d'ancrage 12 de forme annulaire de telle manière que :
- lorsque l'ensemble mobile 4 est en position d'attente, l'extrémité libre de l'insert 6 et l'élément d'ancrage 12 s'étendent partiellement à l'extérieur en saillie du canal 3 ;
- lorsque l'ensemble mobile 4 est en position de fonctionnement, l'extrémité libre de l'insert 6 affleure le corps 2 et l'élément d'ancrage 12 soit reçu en totalité dans le canal 3.
L'élément d'ancrage 12 comporte :
- un premier redan externe 12.1 agencé pour être reçu dans un premier logement 3.11 du tronçon d'entrée 3.1 lorsque l'ensemble mobile 4 est en position d'attente pour s'opposer à une extraction de l'ensemble mobile 4 hors du canal 3 ; et
- un deuxième redan externe 12.2, plus haut que le premier redan 12.1 et disposé en amont de celui-ci par référence au sens d'introduction du tube T dans le canal 3, agencé pour être reçu dans un deuxième logement 3.12 du tronçon d'entrée 2.1 lorsque l'ensemble mobile 4 est en position de fonctionnement de manière à s'opposer à une extraction de l'ensemble mobile 4 hors du canal 3.

L'élément d'ancrage 12 est ainsi agencé pour s'opposer à une extraction de l'insert hors du canal 3 dans chacune des positions de l'ensemble mobile 4 et donc de la fourrure 5.

L'élément d'ancrage 12 est un jonc annulaire fendu qui peut être élastiquement déformé en un état de repos dans laquelle le deuxième redan 12.2 a un diamètre externe supérieur au diamètre interne du deuxième logement 3.12 et un état déformé dans lequel le deuxième redan 12.2 a un diamètre interne inférieur au diamètre interne du tronçon d'entrée 3.1. Le premier redan 12.1 et le deuxième redan 12.2 présentent une surface aval (par référence au sens d'introduction du tube T dans le canal 3) inclinée pour faciliter la déformation élastique de l'élément d'ancrage 12 et l'enfoncement de l'ensemble mobile 4 dans le canal 3 et une surface amont (par référence au sens d'introduction du tube T dans le canal 3) radiale ou quasi radiale pour s'opposer à l'extraction de l'ensemble mobile 4 hors du canal 3 en coopérant avec une surface homologue des logements 3.11, 3.12 respectivement.

Avant toute connexion (figure 1a), l'ensemble mobile 4 est en position d'attente et l'élément d'ancrage 12 est partiellement en saillie du canal 3, le premier redan 12.1 étant reçu dans le premier logement 3.11.

Au début de la connexion, le tronçon d'extrémité du tube T est simultanément engagé sur l'extrémité libre de la douille interne 5.1 et dans le joint anti-poussière 11, l'ensemble mobile 4 étant maintenu dans la position d'attente par les jambes 5.4 en appui contre le fond du lamage 3.2 au voisinage du débouché du tronçon principal 3.3.

L'effort d'enfoncement du tube T se poursuivant, le tronçon d'extrémité du tube T passe dans la rondelle d'accrochage 10 et dans le joint d'étanchéité 9 (figure 1b), l'ensemble mobile 4 étant maintenu dans la position d'attente par les jambes 5.4 en appui contre le fond du lamage 3.2.

L'effort d'enfoncement du tube T se poursuivant, le tronçon d'extrémité du tube T recouvre progressivement les jambes 5.4 et tend à les déformer élastiquement pour les rabattre vers l'axe central du corps 2 (figure 1c), jusqu'à forcer le rabattement des jambes 5.4 qui échappent alors à l'appui contre le fond du lamage 3.2 et vont rentrer dans le tronçon principal 3.3. Ce rabattement des jambes 5.4 autorise le déplacement de l'ensemble mobile 4 vers la position de fonctionnement (figure 1d). Simultanément, l'élément d'ancrage 12 s'est déformé élastiquement du fait du glissement des redans 12.1, 12.2 contre le corps 2 à la manière de cames et se trouve entre les logements 3.11 et 3.12. Le déplacement de l'ensemble mobile 4 est relativement brusque et se termine lorsque la fourrure 5 arrive en butée contre le fond du lamage 3.2 (figure 1e). Le deuxième redan 12.2 est alors arrivé en regard du deuxième logement 3.12 et y a pénétré sous l'effet de l'élasticité de l'élément d'ancrage 12 qui a plaqué le deuxième redan 12.2 contre le fond du deuxième logement 3.12. On comprend que, les jambes 5.4 s'étendant en aval des moyens de retenue 7 (c'est-à-dire en aval du joint 9 et de la rondelle d'accrochage 10) par référence au sens d'introduction du tronçon d'extrémité du tube T dans le corps 2, l'ensemble mobile 4, et donc la fourrure 5, ne se déplace vers la position de fonctionnement qu'une fois que le tronçon de tube T est dans une position de connexion correcte par rapport aux moyens de retenue 7.

L'arrivée de la fourrure 5 dans la deuxième position d'enfoncement active ainsi au moins un témoin de connexion. Dans ce premier mode de réalisation, il y a plusieurs témoins de connexion :
- la fourrure 5 et le corps 2 sont dans des matériaux tels que l'arrivée de la fourrure 5 en butée contre le fond du lamage 3.2 (en position de fonctionnement) engendre un son constituant un témoin de connexion ;
- l'élément d'ancrage 12 s'étend en saillie du corps 2 lorsque l'ensemble mobile 4 (et donc la fourrure 5) est dans la position d'attente et est reçu complètement dans le corps 2 lorsque l'ensemble mobile 4 est dans sa position de fonctionnement de sorte que l'élément d'ancrage 12 constitue à la fois un témoin tactile de connexion et un témoin visuel de connexion. L'élément d'ancrage 12 et le corps 2 ont de préférence des couleurs contrastantes pour renforcer le signal visuel constitué par l'escamotage de l'élément d'ancrage 12 dans le corps 2 ;
- du fait de la hauteur du deuxième redan 12.2 (supérieure à la profondeur du deuxième logement 3.12) et de l'élasticité de l'élément d'ancrage 12, le deuxième redan externe 12.2 vient percuter le fond du deuxième logement 3.12 lorsque l'ensemble mobile 4 arrive dans sa position de fonctionnement. L'élément d'ancrage 12 et le corps 2 sont dans des matériaux tels que l'arrivée du deuxième redan externe 12.2 contre le fond du deuxième logement 3.12 engendre un son constituant un témoin de connexion.

A la mise sous pression du circuit, le tube T va légèrement reculer sous l'effet de la pression de fluide mais sera retenu dans l'insert 6 par la rondelle d'accrochage 10 tandis que l'insert 6 sera retenu dans le corps 2 par l'élément d'ancrage 12. La gorge 6.2 recevant l'élément d'ancrage 12 possède un flanc aval incliné et un flanc amont sensiblement radial dont les bords libres définissent une ouverture plus large que le fond de la gorge 6.2. L'élément d'ancrage 12 présente, en regard des flancs de la gorge 6.2, des faces aval et amont ayant des inclinaisons homologues à celles des flancs en regard desquels ils se trouvent de telle manière que, lorsqu'un effort d'extraction est exercé sur le tube T, la coopération du flanc aval de la gorge 6.2 avec la face aval de l'élément d'ancrage 12 tend à faire saillir l'élément d'ancrage 12 hors de la gorge 6.2, renforçant ainsi la retenue de l'insert 6 dans le canal 3.

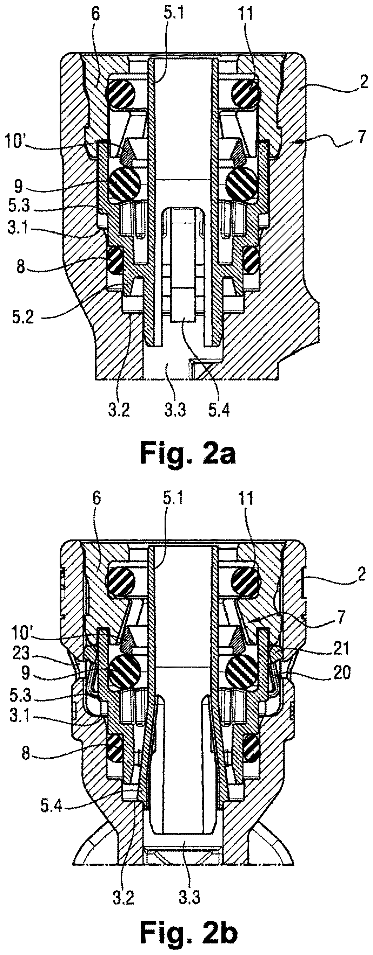

Les éléments identiques ou analogues à ceux précédemment décrits porteront une référence numérique identique à ces derniers dans la description qui suit des deuxième et troisième modes de réalisation en relation avec les figures 2 à 13.

En référence aux figures 2 à 4, le dispositif de raccordement 1 selon le deuxième mode de réalisation comprend comme précédemment : un corps 2, une fourrure 5, un insert 6, des joints 8, 9 et 11.

Ce dispositif de raccordement présente deux différences principales par rapport au premier mode de réalisation :
- l'insert 6 est fixe, seule la fourrure 5 est mobile entre la position d'attente et la position de fonctionnement qui sont les mêmes que précédemment ;
- l'insert 6 est dépourvu de témoin de connexion et seule la fourrure 5 est pourvue de témoins de connexion.

La douille externe 5.3 de la fourrure 5 est ici pourvue de deux bras latéraux 20 ayant une extrémité libre 21 pourvue d'un renflement. Les bras latéraux 20 sont diamétralement opposés l'un à l'autre et sont élastiquement déformables d'un état déformé dans lequel les extrémités libres sont rapprochées de la douille interne 5.1 et un état de repos dans lequel les extrémités libres sont écartées de la douille interne 5.1.

Le corps 2 est pourvu de deux orifices 23 destinés à recevoir les renflements des extrémités libres 21 lorsque la fourrure 5 est dans sa position de fonctionnement.

Accessoirement, la rondelle d'accrochage 10 intérieurement dentée a été remplacée par un anneau d'accrochage 10', fendu, destiné à enserrer le tronçon d'extrémité du tube T et l'épaulement 6.1 a une forme tronconique pour favoriser un serrage de l'anneau d'accrochage 10' sur le tronçon d'extrémité du tube T lorsqu'un effort d'extraction est exercé sur le tube T. L'anneau d'accrochage 10' est élastiquement déformable et comprend une saillie interne pour mordre la surface externe du tronçon d'extrémité du tube T.

Ainsi, avant toute connexion (figure 2a, 2b), la fourrure 5 est en position d'attente et les bras 20 sont maintenus dans un état déformé par les renflements des extrémités libres 21 en appui contre la paroi du tronçon d'entrée 3.1 du canal 3.

Comme précédemment, au début de la connexion, le tronçon d'extrémité du tube T est simultanément engagé sur l'extrémité libre de la douille interne 5.1 et dans le joint anti-poussière 11, la fourrure 5 étant maintenue dans la position d'attente par les jambes 5.4 en appui contre le fond du lamage 3.2 au voisinage du débouché du tronçon principal 3.3.

L'effort d'enfoncement du tube T se poursuivant, le tronçon d'extrémité du tube T passe dans l'anneau d'accrochage 10' et dans le joint d'étanchéité 9, la fourrure 5 étant maintenue dans la position d'attente par les jambes 5.4 en appui contre le fond du lamage 3.2.

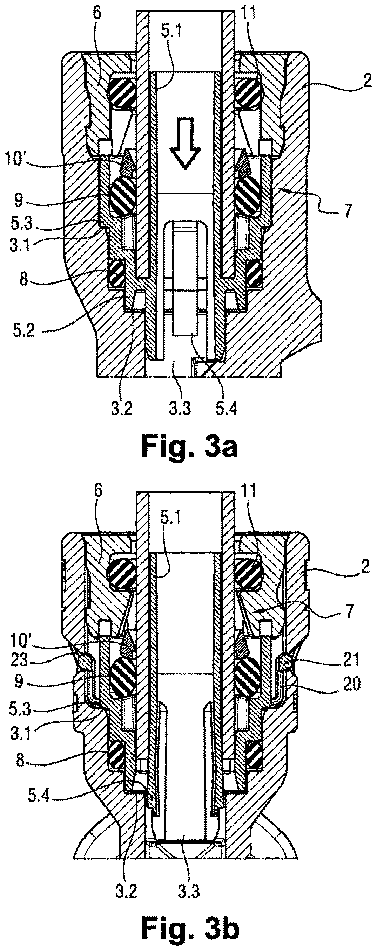

L'effort d'enfoncement du tube T se poursuivant, le tronçon d'extrémité du tube T recouvre progressivement les jambes 5.4 et tend à les déformer élastiquement pour les rabattre vers l'axe central du corps 2, jusqu'à forcer le rabattement des jambes 5.4 qui échappent alors à l'appui contre le fond du lamage 3.2 et rentrent dans le tronçon principal 3.3. Ce rabattement des jambes 5.4 autorise le déplacement de la fourrure 5 vers la position de fonctionnement. Le déplacement de la fourrure 5 est relativement brusque et se termine lorsque la fourrure 5 arrive en butée contre le fond du lamage 3.2 (figure 3a et 3b). Simultanément, les renflements des extrémités libres 21 des bras 20 sont arrivés en regard des orifices 23 et y ont pénétré sous l'effet de l'élasticité des bras 20. Ce faisant, les bras 20 sont rentrés en contact contre le bord des orifices 23. L'extrémité libre 21 est ainsi mobile entre une position escamotée dans laquelle l'extrémité libre 21 est masquée depuis l'extérieur du corps 2 et une position visible dans laquelle l'extrémité libre 21 est visible depuis l'extérieur du corps 2.

Comme précédemment, l'arrivée de la fourrure 5 dans la deuxième position d'enfoncement active au moins un témoin de connexion. Dans ce deuxième mode de réalisation, il y a plusieurs témoins de connexion :
- la fourrure 5 et le corps 2 sont dans des matériaux tels que l'arrivée de la fourrure 5 en butée contre le fond du lamage 3.2 (en position de fonctionnement) engendre un son constituant un témoin sonore de connexion ;
- les renflements des extrémités libres 21 sont reçus dans les orifices 23 et sont visibles de l'extérieur par les orifices 23 lorsque la fourrure 5 est dans la position de fonctionnement alors qu'ils n'apparaissent pas lorsque la fourrure 5 est en position d'attente. Ainsi, les renflements des extrémités libres 21 constituent un témoin visuel de connexion. Les bras 21 et le corps 2 ont de préférence des couleurs contrastantes pour renforcer le signal visuel constitué par l'apparition des renflements dans les orifices 23 ;
- du fait de la hauteur du renflement de l'extrémité libre 21 des bras 20 et de l'élasticité des bras 20, les bras 20 au voisinage de leur extrémité libre 21 viennent percuter brusquement la paroi du tronçon d'extrémité 3.1 lorsque la fourrure 5 arrive dans sa position de fonctionnement. Les bras 20 et le corps 2 sont dans des matériaux tels que le choc des bras 20 contre la paroi du tronçon d'entrée 3.1 engendre un son constituant un témoin sonore de connexion.

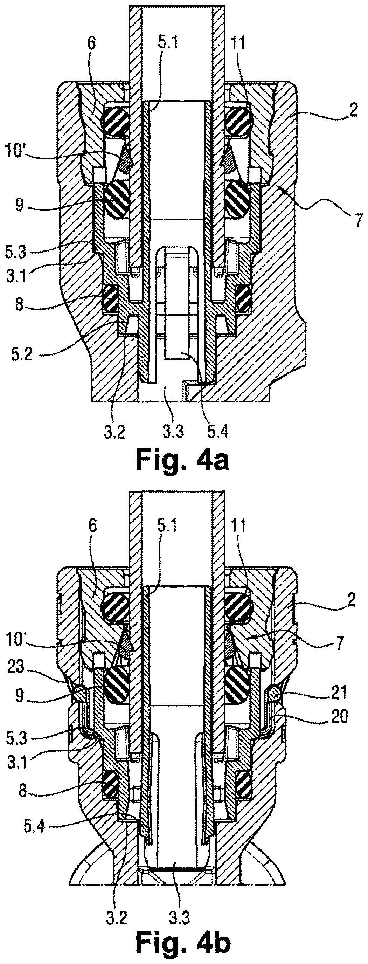

A la mise sous pression du circuit, le tube T va légèrement reculer sous l'effet de la pression de fluide mais va entraîner l'anneau d'accrochage 10' qui va venir glisser contre la surface tronconique de l'épaulement 6.11 augmentant le serrage de l'anneau fendu 10' sur le tube T (figure 4a, 4b) et l'insert 6 va s'opposer à l'extraction du tube T.

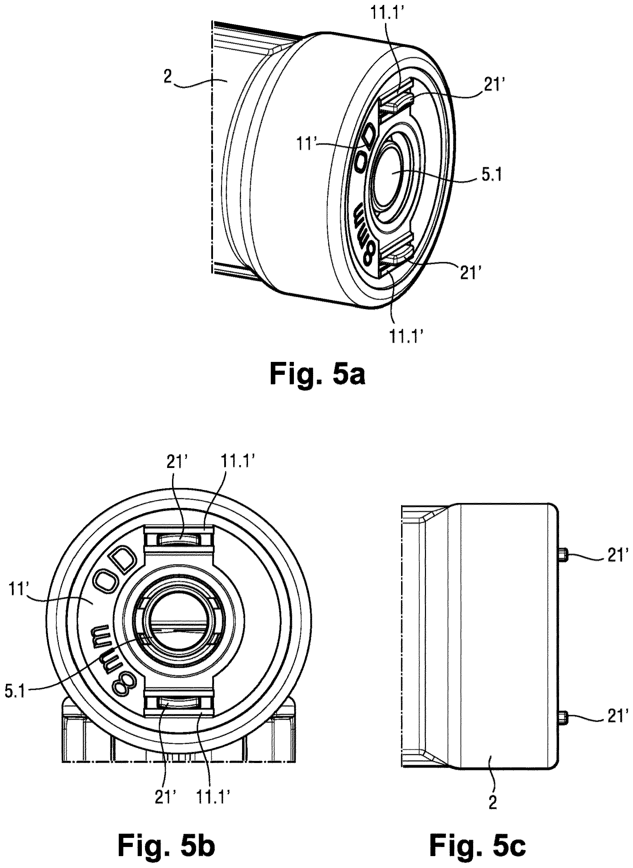

En référence aux figures 5 à 13, le dispositif de raccordement 1 selon le troisième mode de réalisation comprend comme précédemment : un corps 2, une fourrure 5, un insert, et des joints 8, 9.

Le dispositif de raccordement selon le troisième mode de réalisation présente deux différences principales par rapport au deuxième mode de réalisation :
- les bras latéraux 20 sont remplacés par des premiers bras axiaux 20' ;
- le joint anti-poussière 11 est remplacé par un joint anti-poussière 11' ayant une forme différente.

En outre, dans le troisième mode de réalisation, l'insert 6' est fixé dans l'entrée du canal 3 comme dans le deuxième mode de réalisation mais a une structure différente de celle du deuxième mode de réalisation.

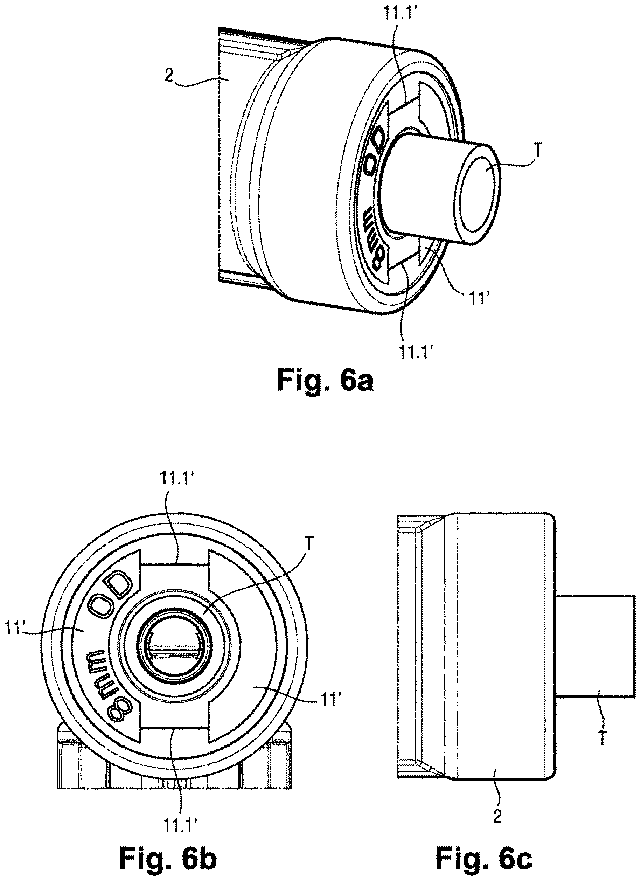

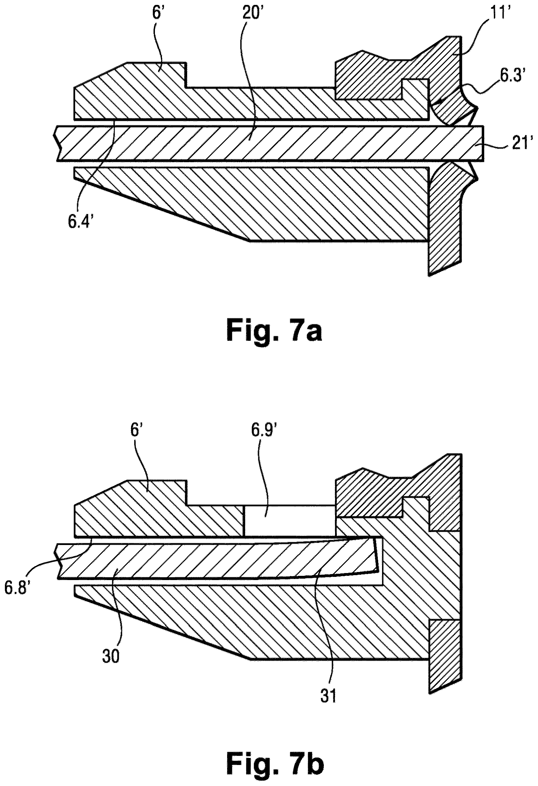

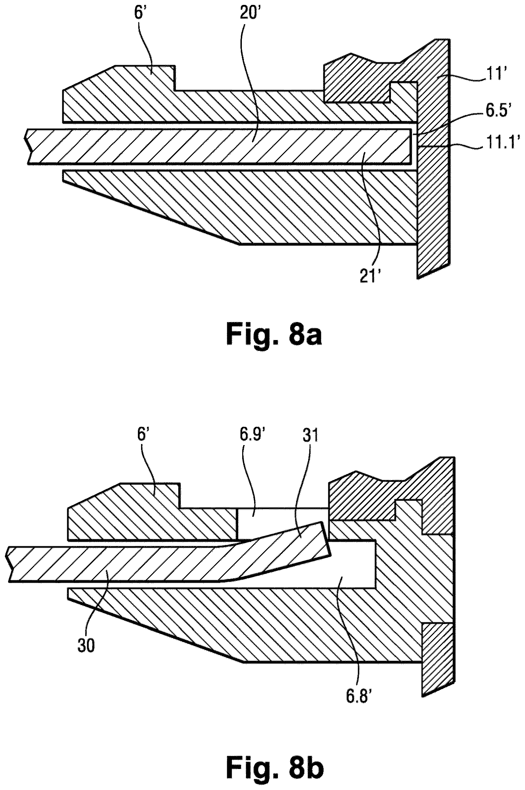

La douille externe 5.3 de la fourrure 5 a une extrémité libre dont sont solidaires deux premiers bras axiaux 20' ayant une extrémité libre 21'. Les premiers bras axiaux 20' sont diamétralement opposés l'un à l'autre et traversent l'insert 6' dans des perçages 6.4' pour que leurs extrémités libres 21' s'étendent en saillie axiale de la face 6.3' de l'insert 6' par des ouvertures 6.5' lorsque la fourrure 5 est en position d'attente (figures 5 et 7) et soient escamotées lorsque la fourrure 5 est en position de fonctionnement (figures 6 et 8).

L'extrémité libre de la douille externe 5.3 de la fourrure 5 est également pourvue de deux deuxièmes bras axiaux 30 ayant une extrémité libre 31. Les deuxièmes bras axiaux 30 sont diamétralement opposés l'un à l'autre et sont intercalés entre les premiers bras axiaux 20'. Les deuxièmes bras axiaux 30 sont élastiquement déformables entre un état déformé dans lequel les extrémités libres 31 sont rapprochées de l'axe central de la douille externe 5.3 et un état de repos dans lequel les extrémités libres 31 sont écartées de l'axe central de la douille externe 5.3. Les deuxièmes bras axiaux 30, plus courts que les premiers bras axiaux 20', sont reçus dans des conduits 6.8' axiaux de l'insert 6'. Les deuxièmes bras axiaux 30 :
- sont maintenus dans leur état déformé par les parois des conduits 6.8' de l'insert 6' lorsque la fourrure 5 est dans sa position d'attente (figures 5 et 7), et
- ont, lorsque la fourrure 5 est en position de fonctionnement, leurs extrémités libres 31 en regard d'orifices 6.9' débouchant dans les conduits 6.8' et autorisant un retour élastique des deuxièmes bras axiaux 30 vers leur état de repos de sorte que les extrémités libres 31 sont en saillie dans lesdits orifices 6.9' (figures 6 et 8).

Le joint d'étanchéité 11' a la forme d'un capotage recouvrant l'extrémité du corps 2 dans laquelle est inséré l'insert 6' . Le joint d'étanchéité 11' est percé d'une ouverture centrale pour le passage du tube T et de fentes 11.1' à l'aplomb des ouvertures 6.5' et peut comprendre un rebord venant enserrer une portion annulaire de la paroi latérale du corps 2 ou être surmoulé sur l'insert 6'.

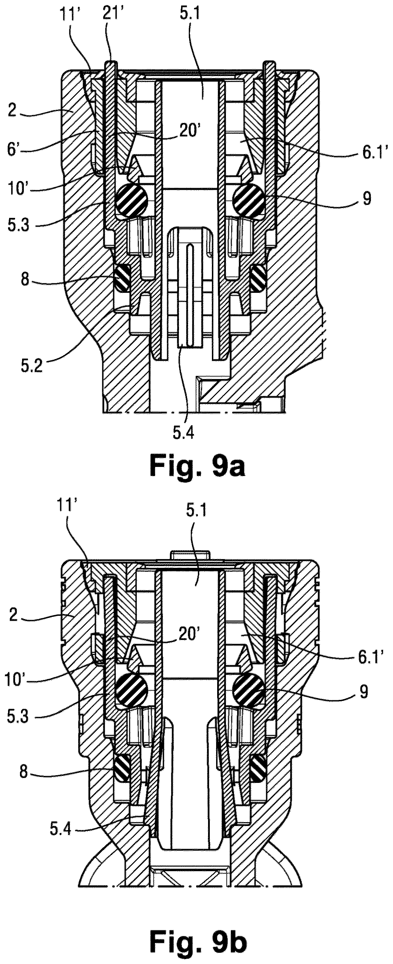

Ainsi, avant toute connexion (figure 9 a, b), la fourrure 5 est en position d'attente et les extrémités libres 21' des bras 20' sont en saillie par les ouvertures 6.5' et les fentes 11.1'.

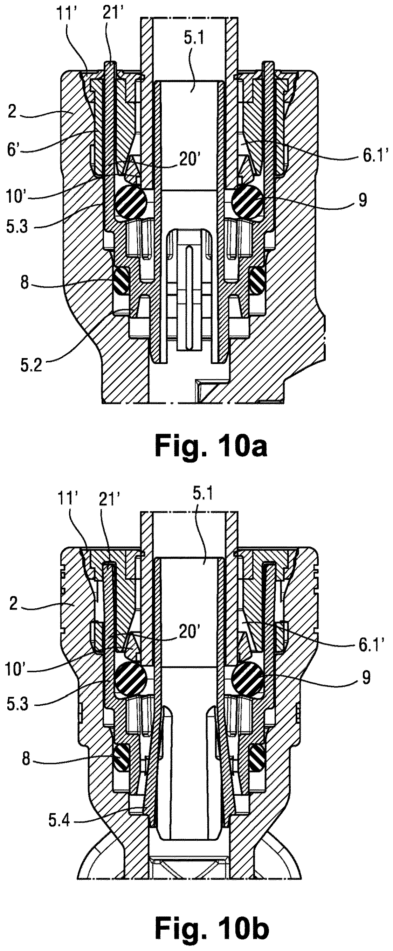

Comme précédemment, au début de la connexion (figure 10 a, b), le tronçon d'extrémité du tube T est simultanément engagé sur l'extrémité libre de la douille interne 5.1 et dans le joint anti-poussière 11', la fourrure 5 étant maintenue dans la position d'attente par les jambes 5.4 en appui contre le fond du lamage 3.2 au voisinage du débouché du tronçon principal 3.3.

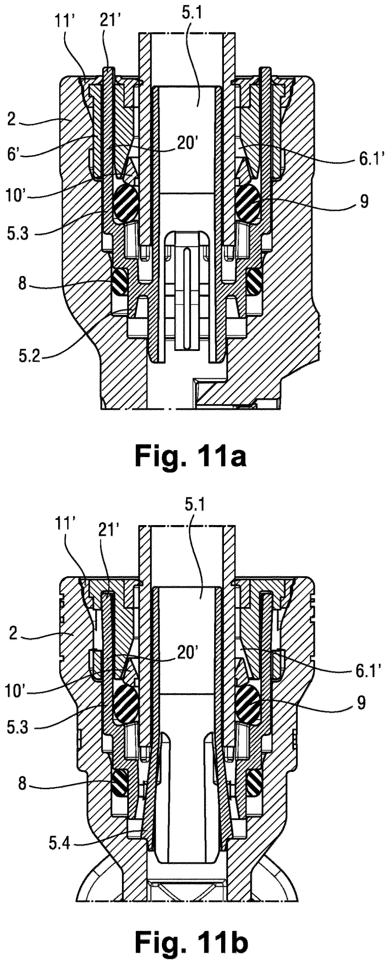

L'effort d'enfoncement du tube T se poursuivant, le tronçon d'extrémité du tube T passe dans l'anneau d'accrochage 10' et dans le joint d'étanchéité 9, la fourrure 5 étant maintenue dans la position d'attente par les jambes 5.4 en appui contre le fond du lamage 3.2 (figure 11 a, b) .

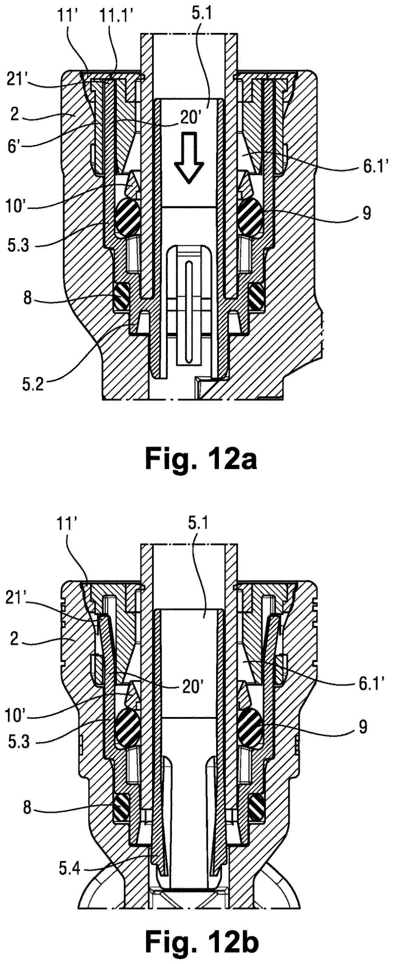

L'effort d'enfoncement du tube T se poursuivant, le tronçon d'extrémité du tube T recouvre progressivement les jambes 5.4 et tend à les déformer élastiquement pour les rabattre vers l'axe central du corps 2, jusqu'à forcer le rabattement des jambes 5.4 qui échappent alors à l'appui contre le fond du lamage 3.2 et rentrent dans le tronçon principal 3.3. Ce rabattement des jambes 5.4 autorise le déplacement de la fourrure 5 vers la position de fonctionnement. Le déplacement de la fourrure 5 est relativement brusque et se termine lorsque la fourrure 5 arrive en butée contre le fond du lamage 3.2 (figure 12 a et b).

Simultanément, les extrémités libres 21' des bras 20' s'escamotent et les fentes 11.1' se referment tandis que les extrémités libres 31 arrivent en regard des orifices 6.9' de sorte que les deuxièmes bras axiaux 30 reviennent élastiquement vers leur état de repos en venant percuter la paroi de l'insert 6' aux alentours de l'orifice 6.9'. On note que les fentes 11.1' sont délimitées par deux lèvres en contact l'une avec l'autre lorsque les extrémités 21' sont escamotées, ce qui a deux avantages : le joint anti-poussière 11' empêche l'introduction de poussière via les ouvertures 6.9' et masque les extrémités 21' à la vue. L'extrémité libre 21' est ainsi mobile entre une position visible dans laquelle l'extrémité libre 21' est visible depuis l'extérieur du corps 2 et une position escamotée dans laquelle l'extrémité libre 21' est masquée depuis l'extérieur du corps 2.

Comme précédemment, l'arrivée de la fourrure 5 dans la deuxième position d'enfoncement active au moins un témoin de connexion. Dans ce troisième mode de réalisation, il y a plusieurs témoins de connexion :
- la fourrure 5 et le corps 2 sont dans des matériaux tels que l'arrivée de la fourrure 5 en butée contre le fond du lamage 3.2 (en position de fonctionnement) engendre un son constituant un témoin de connexion ;
- les extrémités libres 21' s'étendent en saillie de l'insert 6' et du joint anti-poussière 11' lorsque la fourrure 5 est dans la position d'attente et sont reçues complètement dans les conduits 6.4' lorsque la fourrure 5 est dans sa position de fonctionnement de sorte que les premiers bras axiaux 20' constituent à la fois un témoin tactile de connexion et un témoin visuel de connexion. Les premiers bras axiaux 20' et le joint anti-poussière 11' ont de préférence des couleurs contrastantes pour renforcer le signal visuel constitué par l'escamotage des extrémités libres 21' dans les conduits 6.4' ;
- du fait de l'élasticité des deuxièmes bras axiaux 30, les deuxièmes bras axiaux 30, au voisinage de leurs extrémités libres 31, viennent percuter la paroi des conduits 6.8' au voisinage des orifices 6.9' lorsque la fourrure 5 arrive dans sa position de fonctionnement. Les deuxièmes bras axiaux 30 et l'insert 6' sont dans des matériaux tels que le choc des deuxièmes bras axiaux 30 contre la paroi des conduits 6.8' engendre un son constituant un témoin sonore de connexion.

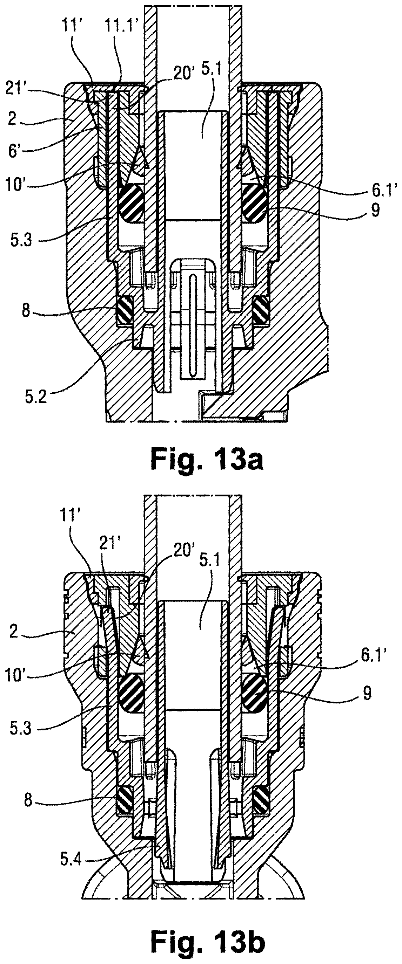

A la mise sous pression du circuit, le tube T va légèrement reculer sous l'effet de la pression de fluide mais sera comme précédemment retenu dans l'insert 6' par l'anneau d'accrochage 10' qui va venir glisser contre la surface tronconique de l'épaulement 6.1' augmentant le serrage de l'anneau d'accrochage 10' sur le tube T (figure 13 a et b) .

Bien entendu, l'invention n'est pas limitée aux modes de réalisation décrits mais englobe toute variante entrant dans le champ de l'invention telle que définie par les revendications.

En particulier, le corps tubulaire peut avoir une structure différente de celle décrite, de même que les moyens pour assurer l'étanchéité du raccordement et l'assujettissement de l'extrémité de tube. Il est ainsi possible d'avoir une connexion instantanée au moyen d'une pince, un verrou radial ou d'une rondelle dentée, ou une connexion non instantanée par vissage ou autre. Il est possible de prévoir un poussoir de déconnexion pour agir sur l'élément d'accrochage de manière à pouvoir extraire le tube T.

Les moyens de retenue peuvent être portés ou pas par un insert solidaire en translation de la fourrure.

L'insert peut ne pas être solidaire en translation de la fourrure.

L'élément d'ancrage de l'insert peut être agencé pour s'opposer à une extraction de l'insert hors du canal dans une seule des positions de la fourrure. Il est possible d'avoir un élément d'ancrage par position.

L'invention s'applique aux dispositifs dépourvus de fourrure.

La fourrure 5 peut comporter une ou plusieurs jambes 5.4. La ou les jambes peuvent avoir une forme et/ou un agencement différents de ceux décrits.

La jambe 5.4 est agencée pour prendre appui contre un ressaut du canal 2 lorsque la fourrure 5 est dans la position d'attente de manière à s'opposer au déplacement de la fourrure 5 vers la position de fonctionnement. Le ressaut peut être formé par la butée à l'enfoncement de la fourrure 5 dans le canal 2 au-delà de la position de fonctionnement, ou par un ressaut distinct de cette butée.

## Revendications

1. Dispositif de raccordement (1) d'un tronçon d'extrémité de tube (T), comprenant : un corps tubulaire (2) délimitant un canal (3) pourvu de moyens de retenue (7) dont un élément d'accrochage (10) pour s'engager sur une surface externe du tronçon d'extrémité de tube (T) et un joint d'étanchéité annulaire (9) pour enserrer la surface externe du tronçon d'extrémité de tube (T), le dispositif comprenant au moins un premier bras (20, 20') ayant une extrémité agencée dans le canal (3) pour être actionnée par le tronçon d'extrémité de tube (T) en aval des moyens de retenue pour faire d'une portion du bras un témoin de connexion détectable depuis l'extérieur du corps et une extrémité libre (21, 21') mobile selon une direction sensiblement axiale entre une position visible dans laquelle l'extrémité libre est visible depuis l'extérieur du corps (2) et une position escamotée dans laquelle l'extrémité libre est masquée depuis l'extérieur du corps.

2. Dispositif selon la revendication 1, dans lequel l'extrémité libre (21') fait saillie à l'extérieur du corps (2) par une ouverture ménagée dans un insert (6') fixé à une entrée du canal (3) pour retenir les moyens de retenue (7) .

3. Dispositif selon la revendication 2, dans lequel un joint anti-poussière (11') recouvre une face frontale du corps (2) et de l'insert (6'), le joint anti-poussière (11') comprenant, en regard de l'ouverture, une fente (11.1') délimitée par deux lèvres élastiquement en contact l'une contre l'autre quand l'extrémité libre (21') est en position escamotée et que l'extrémité libre (21') écarte lorsqu'elle arrive en position visible.

4. Dispositif selon l'une quelconque des revendications précédentes, comprenant une fourrure (5) montée dans le canal (3) pour coulisser entre une position d'attente dans laquelle la fourrure (5) est écartée d'une butée (3.2) à son enfoncement dans le canal (3) et une position enfoncée de fonctionnement dans laquelle la fourrure (5) est en appui contre la butée (3.2), la fourrure (5) étant agencée pour être engagée dans le tronçon d'extrémité de tube (T) lorsqu'elle est en position d'attente et être déplacée vers sa position enfoncée lorsque le tronçon d'extrémité de tube (T) a passé les moyens de retenue (7).

5. Dispositif selon la revendication 4, dans lequel la fourrure (5) comprend, en aval des moyens de retenue (7) par référence à un sens d'introduction du tronçon d'extrémité de tube (T) dans le corps (2), au moins une jambe (5.4) agencée pour prendre appui contre un ressaut du canal lorsque la fourrure (5) est dans la position d'attente et s'opposer au déplacement de la fourrure (5) vers la position de fonctionnement et pour être escamotée par le tronçon d'extrémité de tube (T) lorsque la fourrure (5) est engagée dans le tronçon d'extrémité de tube (T) sur une longueur prédéterminée.

## Patentansprüche

1. Anschlussvorrichtung (1) für einen Rohrendabschnitt (T), umfassend: einen rohrförmigen Körper (2), welcher einen Kanal (3) begrenzt und mit Haltemitteln (7) versehen ist, unter anderem mit einem Verhakungselement (10) zum Ineingrifftreten mit einer Außenfläche des Rohrendabschnitts (T) sowie mit einer ringförmigen Dichtung (9) zum Umgreifen der Außenfläche des Rohrendabschnitts (T), wobei die Vorrichtung zumindest umfasst: einen ersten Arm (20, 20') mit einem derart im Kanal (3) angeordneten Ende, dass dieses abströmseits der Haltemittel von dem Rohrendabschnitt (T) betätigt wird, damit ein Teilabschnitt des Arms als ein von außerhalb des Körpers erkennbarer Anschlussindikator dienen kann, sowie ein freies Ende (21, 21'), das in einer im Wesentlichen axialen Richtung zwischen einer sichtbaren Position, in welcher das freie Ende von außerhalb des Körpers (2) sichtbar ist, und einer verdeckten Position, in welcher das freie Ende von außerhalb des Körpers verborgen ist, bewegt werden kann.

2. Vorrichtung nach Anspruch 1, wobei das freie Ende (21') durch eine Öffnung in einem Einsatz (6'), der an einem Eingang des Kanals (3) befestigt ist, aus dem Körper (2) herausragt, um die Haltemittel (7) zurückzuhalten.

3. Vorrichtung nach Anspruch 2, wobei eine Staubdichtung (11') eine Stirnseite des Körpers (2) und des Einsatzes (6') bedeckt, wobei die Staubdichtung (11') der Öffnung gegenüberliegend einen Spalt (11.1') umfasst, der durch zwei Lippen begrenzt wird, die elastisch miteinander in Kontakt stehen, wenn sich das freie Ende (21') in verdeckter Position befindet, und die durch das freie Ende (21') auseinandergespreizt werden, wenn dieses seine sichtbare Position einnimmt.

4. Vorrichtung nach einem der vorhergehenden Ansprüche, umfassend eine Muffe (5), die derart in dem Kanal (3) montiert ist, dass sie zwischen einer Warteposition, in welcher die Muffe (5) beim Einschieben in den Kanal (3) von einem Anschlag (3.2) beabstandet ist, und einer eingeschobenen Arbeitsposition, in welcher die Muffe (5) an dem Anschlag (3.2) anliegt, verschiebbar ist, wobei die Muffe (5) dazu eingerichtet ist, mit dem Rohrendabschnitt (T) in Eingriff zu stehen, wenn sie sich in der Warteposition befindet, und in die eingeschobene Position bewegt zu werden, wenn der Rohrendabschnitt (T) die Haltemittel (7) passiert hat.

5. Vorrichtung nach Anspruch 4, wobei die Muffe (5) in Bezug auf eine Einführrichtung des Rohrendabschnitts (T) in den Körper (2) den Haltemitteln (7) nachgeordnet zumindest einen Schenkel (5.4) umfasst, der so beschaffen ist, dass er sich an einem Vorsprung des Kanals abstützt, wenn sich die Muffe (5) in der Warteposition befindet, und sich dabei der Bewegung der Muffe (5) in Richtung zu der Arbeitsposition widersetzt, und dass er von dem Rohrendabschnitt (T) verdeckt wird, wenn die Muffe (5) über eine vorbestimmte Länge in den Rohrendabschnitt (T) eingeschoben ist.

## Claims

1. A connecting device (1) of a tube end section (T), comprising: a tubular body (2) defining a channel (3) provided with retaining means (7), including a hooking element (10) for engaging an outer surface of the tube end section (T), and an annular seal (9) for gripping the outer surface of the tube end section (T), the device comprising at least a first arm (20, 20') having an end arranged in the channel (3) to be actuated by the tube end section (T) downstream of the retaining means so as to make a portion of the arm a connection indicator which is detectable from outside the body and a free end (21, 21') movable in a substantially axial direction of the body between a visible position in which the free end can be seen from the outside of the body (2) and a retracted position in which the free end is concealed from the outside of the body.

2. The device according to claim 1, wherein the free end (21') projects outside the body (2) through an opening arranged in an insert (6') fixed to an inlet of the channel (3) to retain the retaining means (7).

3. The device according to claim 2, wherein a dust-resistant seal (11') covers a front face of the body (2) and of the insert (6'), the dust-resistant seal (11') comprising, facing the opening, a slot (11.1') delimited by two lips elastically in contact with each other when the free end (21') is in the retracted position and when the free end (21') moves apart when it arrives in the visible position.

4. The device according to any one of the preceding claims, comprising a bushing (5) mounted in the channel (3) to slide between a standby position in which the bushing (5) is spaced apart from a stop (3.2) at its recessing in the channel (3) and a recessed operating position in which the bushing (5) presses against the stop (3.2), the bushing (5) being arranged to be engaged in the tube end section (T) when it is in the standby position and to be moved towards its recessed position when the tube end section (T) has passed the retaining means (7).

5. The device according to claim 4, wherein the bushing (5) comprises, downstream from the retaining means (7) by reference to a direction of insertion of the tube end section (T) in the body, at least a leg (5.4) arranged to press against a projection of the channel when the bushing (5) is in the standby position and to oppose the movement of the bushing (5) toward the operating position and to be retracted by the tube end section (T) when the bushing (5) is engaged in the tube end section (T) over a predetermined length.
